# EUROPEAN PATENT APPLICATION

(11) **EP 2 937 404 A1**
(43) Date of publication of application: **28.10.2015**
(21) Application number: 14187754.8
(22) Date of filing: 06.10.2014
(51) Int. Cl.: C10G 47/02, B01J 31/04

(54) **Liquid-phase catalytic cracking of heavy petroleum materials to produce petroleum products for use as motor fuel components and chemical raw materials**

(30) Priority: 23.04.2014 EP 14165595
(71) Applicant: Popova, Natalia, 300026 Tula (RU)
(72) Inventor: Fridzon, Konstantin, 300026 Tula (RU); Platonov, Vladimir, 300026 Tula (RU); Vorobev, Nikolay, 300026 Tula (RU); Balashova, Galina, 142791 Moscow (RU)
(74) Representative: Schaad, Balass, Menzl & Partner AG

(57) **Abstract**

The present application relates to a process for catalytic cracking of heavy petroleum starting materials by treating the starting material with a catalyst and optionally a hydrogen donor at a temperature of 280-400 °C and a pressure of 2-7 MPa, wherein the catalyst comprises one or more metal carboxylate salt(s).

## Description

The invention relates to the chemical processing of heavy petroleum materials to produce petroleum products that can be utilized in the production of high-quality motor fuel components and as chemical raw materials for basic organic, biochemical and petrochemical synthesis, and the production of anode paste for electrothermal and electrochemical enterprises, water-, heat- and sound-insulating materials, and bituminous concrete for road making.

Petroleum (or "crude oil"; these terms are often used interchangeably) is broadly defined to include an array of liquid hydrocarbon mixtures, i.e. products that only contain the elements hydrogen and carbon. To make crude oil useful, batches of similar compounds with similar properties (in particular: number of carbon atoms and boiling points) are separated by fractional distillation into fractions. These fractions can be sorted into three categories:
A. light petroleum (refinery gas, gasoline, naphtha) with molecule chains of 1 to 12 carbon atoms and a boiling point of up to about 180 °C;
B. medium petroleum (kerosene, diesel) with molecule chains of 11 to 19 carbon atoms and a boiling point of up to 360 °C; and
C. heavy petroleum and residuum (heavy fuel oil, lubricating oils, wax, asphalt, bitumen) with molecule chains of more than 50 carbon atoms and a boiling point above 360 °C.

Petroleum consists primarily of paraffins and naphthenes, with a smaller amount of aromatics and asphaltics.

Heavy petroleum is called "heavy" (dense and viscous) due to the high ratio of aromatics and naphthenes to linear alkanes and high amounts of NSO's (nitrogen, sulfur, oxygen and heavy metals). Heavy petroleum has a higher percentage of compounds with over 60 carbon atoms and hence a high boiling point and molecular weight. Heavy crude oil is closely related to natural bitumen from oil sands. Natural bitumen is the heaviest, thickest form of petroleum and is categorized as 'extra-heavy oil' due to its high viscosity (i.e. resistance to flow) of greater than 10,000 centipoise (cP).

On one hand, due to increased refining costs and high sulfur content for some sources, heavy crudes are often priced at a discount to lighter ones. The increased viscosity and density also makes production more difficult. On the other hand, the resources of heavy petroleum in the world are more than twice those of conventional light crude oil. The fall in the reserves and production volumes of light crude oils in many oil-producing countries creates a need to bring into use unconventional sources of hydrocarbon raw materials. For this reason, scientists have been working on the development of efficient chemical processing methods (so-called "cracking" methods) that allow for using heavy crude oils, oil shales and natural bitumens as raw materials for oil refining.

Currently, the most promising method is considered to be "mild" catalytic cracking using selective catalysts, which provide a high yield of fractions with boiling point up to 360 °C and which are characterized by a high content of gasoline and diesel fractions, enriched in iso- and cyclo-alkanes, isoprenoids and low-molecular arenes, which are largely responsible for the high quality of motor fuel.

Particular attention has been devoted to the development of processes of liquid-phase catalysis using catalysts, which are readily soluble in hydrocarbons and exhibit high selectivity in reactions of isomerization, cyclization, intramolecular rearrangement of hydrogen and dealkylation, with a low proportion of the process of condensation, which leads to the accumulation of highly-condensed arenes and naphthenoarenes in the liquid products.

US 7,446,071 discloses a method for enhancing the production of light olefins using a catalyst with small pores to limit production of aromatics in the cracking process. The catalyst has a fairly complex physical structure, comprising an inner and an outer zeolite layer and a high silica to alumina ratio. In addition, the cracking process is classified as heterogeneous and is designed for deep thermal breakdown of components of the initial crude oil to give light fractions of olefins. Thus, the oil used must have a low content of resinous compounds and asphaltenes, since otherwise frequent regeneration of the catalyst will be required, with removal of pyrocarbon deposited on the surface of the latter, which reduces its service life and complicates the process as a whole.

US 7,314,964 discloses a process for selective catalytic cracking of oil fractions to ethylene and propylene. The process is heterogeneous and utilizes a catalyst of similar type to the one of US 7,446,071. In addition, the process uses solely narrow fractions of oil and is very limited with regard to the raw material, specifically to the content of hetero-compounds, resinous substances and asphaltenes therein.

RU 2003/106560 discloses a method for preparing a bead catalyst for cracking petroleum raw materials. Preparation of the catalyst includes mixing aluminum sulfate and sodium silicate solutions with zeolite NaY suspension to form aluminosilicate zeolite-containing hydrosol, which further coagulates into bead-shaped hydrogel in mineral oil layer. The hydrogel is then subjected to syneresis in sodium sulfate solution, followed by activation, washing, drying, and calcination for several days. One major drawback is the difficulty of adhering to the stated conditions, the concentration of the initial reagents, and the presence of nitrates of rare-earth elements as activators. Also, the catalyst is for use in a heterogeneous process of cracking petroleum raw materials, which comes with the deficiencies discussed above.

RU 2,255,958 discloses a method for processing heavy crude oil fractions by catalytic and thermal cracking in the presence of an activating additive. The additive is prepared by treating petroleum products, which contain at least 0.65% of sulfur-containing compounds (calculated as sulfur equivalent) and at least 3.5% of polycyclic arene compounds, with an ozone-containing gas. The products are subsequently separated into fractions and the processing is accomplished by stepwise introduction of the activating additive into the processed heavy petroleum fractions.

Although the above process can be classified as homogeneous catalysis, there are significant limitations on the content of sulfur-containing compounds and polycyclic arenes in the initial crude oil fraction used for preparing the activating additive. A further drawback is the use of an ozone-containing gas, which is a strong oxidizing agent, causing significant amounts of oxygen-containing compounds to accumulate in the cracking products, which adversely affects the properties and composition of the resultant cracking products.

RU 2,235,590 discloses a catalyst for converting C2-C12 aliphatic hydrocarbons into high-octane gasoline and/or aromatic hydrocarbons. The catalyst is characterized in that it contains ferroaluminosilicate with a type ZSM-5 zeolite structure and further comprises at least one modifying metal; a strengthening additive selected from the group of bromine, phosphorus or mixtures thereof; and aluminum oxide as a binder.

Disadvantages are the complexity of the catalyst composition, and correspondingly the preparation thereof while complying with the required quantitative ratio of the components. Further drawbacks are the use of rare-earth elements and the limitation to catalytic cracking of only fairly light aliphatic hydrocarbons (C2-C12).

In US 6,547,956, a process is proposed for hydrocracking and hydrotreating various oils with an initial boiling point of more than 370 °C as starting material to produce diesel oil and lighter materials. The process includes a first hydrogenation reaction in the presence of multiple hydrogenation catalyst beds, which is limited to the hydrogenation level needed for the removal of sulfur and nitrogen and for aromatic saturation and to produce an effluent of both hydrocracked oil and uncracked heavy oil. The effluent is then flashed to produce hydrocracked oil vapors and liquid uncracked heavy oil. The hydrocracked oil fraction is further hydrotreated by catalytic distillation in a post-treatment reactor to give the final product quality, while the liquid uncracked heavy oil bypasses the post-treatment reactor.

Disadvantages of the process are its multi-stage nature and heterogeneity, the use of molecular hydrogen under pressure at high temperature, which increases the fire-and explosion-hazard of the process, and the presence of a catalyst of fairly complex composition.

RU 2,237,700 discloses a method for processing heavy oil residues comprising treatment of the starting material with atmospheric air and subsequent thermal cracking. The method has the benefit that any crude oil residues of varying origin, spent oils, oil sludges, etc. may be used as the starting material. Also, it is possible to produce significant amounts of light petroleum products (gasoline and diesel fractions) which exceed the amounts obtained using other known methods, together with a 1.5- to 2.0-fold reduction in coke formation. However, it is a multi-stage process and strict compliance with the process conditions, in particular the temperature and time limits, is necessary in order to avoid deep oxidation of the starting material hydrocarbons. In addition, the thermal cracking stage needs to be stopped periodically for removal of coke in order to prevent deep occurrence of coke formation, intensifying the process of thermolysis with preferential formation of gaseous products. Avoiding use of a catalyst reduces process selectivity, and the liquid products obtained will be enriched in α-olefins, thus significantly impairing the quality of the gasoline and diesel fractions.

In view of the above, it is the object of the present invention to develop a process that allows for catalytic cracking of a wide range of heavy petroleum materials, in particular petroleum with molecule chains of more than 50 carbon atoms and a boiling point above 360 °C, in order to produce petroleum products that are suitable for use in the production of motor fuel and as chemical raw materials.

Said object is achieved by the process according to claim 1 of the present application, which is a process for catalytic cracking of a heavy petroleum starting material by treating the starting material with a catalyst and optionally a hydrogen donor at a temperature of 280-400 °C and a pressure of 2-7 MPa. The at least one catalyst comprises one or more metal carboxylate salt (s) [(Mⁿ⁺) (A⁻)ₙ], the carboxylate anion A of each metal carboxylate salt being independently of one another selected from the group consisting of anions of saturated C1-C20 carboxylic acids and the metallic cation M of each metal carboxylate salt being independently of one another selected from the groups III, IV, VI, VII, VIII and E, wherein
- group III consists of scandium (Sc), yttrium (Y), aluminum (Al), gallium (Ga), indium (In) and thallium (Tl);
- group IV consists of titanium (Ti), zirconium (Zr), hafnium (Hf), rutherfordium (Rf), tin (Zn) and lead (Pb) ;
- group VI consists of chromium (Cr), molybdenum (Mo), tungsten (W), seaborgium (Sg) and polonium (Po);
- group VII consists of manganese (Mn), technetium (Tc), rhenium (Re) and bohrium (Bh);
- group VIII consists of iron (Fe), ruthenium (Ru), osmium (Os), hassium (Hs), cobalt (Co), rhodium (Rh), iridium (Ir), nickel (Ni), palladium (Pd) and platinum (Pt), and
- group E consists of the rare-earth metals, in particular lanthanum (La), neodymium (Nd), dysprosium (Dy), cerium (Ce) and samarium (Sm).

It has been found that the process of the present invention enables utilizing heavy petroleum starting materials, such as e.g. topped residuum, oil tar, heavy fuel oil, oil sludges and bitumen, for the production of "lighter" petroleum products. By the term "lighter" petroleum products is meant that some of the heavy petroleum starting material is cracked to afford light to medium petroleum products, which are generally characterized by a high content of low-molecular n-, iso- and cyclo-alkanes and arenes such as benzene, naphthalene and their alkyl homologs, and a low content of olefins, particularly α-olefins, sulfur- and oxygen-containing compounds. These light to medium petroleum products are of high economic value because they can be used as high-quality motor fuels (e.g. gasoline, diesel fuel) or as chemical raw materials for use in the basic organic, biochemical and petrochemical synthesis industries, the production of bituminous concrete for road making, water-, heat- and wound-insulating materials, anode paste for electrochemical and electrothermal plants, materials for the nuclear power and defense industries and many other purposes.

However, the process of the present invention does not only provide an efficient method to produce significant amounts of light and medium petroleum products, but is also highly beneficial from an economical point of view, as it allows for using catalysts that are easily regenerated, readily available and inexpensive, while avoiding the use of molecular hydrogen under high pressure thanks to the use of efficient hydrogen donors. The hydrogen donor does not necessarily have to be an additional material added to the reaction mixture but may also be already present in the starting material. For instance, the starting material may comprise polycyclic arenes, which are efficient carriers of hydrogen to the radical products of thermolysis of hydrocarbons. If the nature of the starting material requires it, an additional hydrogen donor is added to the reaction mixture. As such, the process of the present invention avoids dependence on the chemical composition of the starting material, allows for reducing the temperature and pressure and is overall characterized by high ecological cleanness, fire- and explosion-safety, and intensive processing of the starting material.

Furthermore, the use of metal salts of saturated carboxylic acids as catalyst has the benefit that it is readily soluble in the reaction mixture and undergoes thermolysis with formation of nano-size free metal particles at low temperatures. This results in high uniformity of catalyst distribution in the reaction mixture, while the metal formed as a result of the thermolysis exhibits high activity in the course of cracking. The process of the present invention can therefore be classified as homogeneous catalysis.

More specifically, the nano-size metal particles formed during thermolysis of the catalyst exhibit high activity and selectivity in reactions of isomerization, cyclization and thermal breakdown of N-, S- and O-containing heterocyclic compounds. As a result, the content of sulfur-, oxygen- and nitrogen-containing components and/or unsaturated components, particularly α-olefins can be effectively reduced. Also, in particular the yield of light petroleum products, i.e. the up to 180 °C fraction of the petroleum products (which is generally characterized by a low content of O-, N- and S-containing and also unsaturated compounds) can be increased.

A further advantage of the process of the present invention is that the binding of hydrogen sulfide by the nano-size free metal particles leads to the formation of sulfides which are poorly-soluble in the liquid products and can therefore easily be separated therefrom. The process of the present invention therefore allows for producing light and medium petroleum products with a very low sulfur content to be produced.

In addition, it has been found that carbon monoxide (CO) is liberated during the thermolysis of the catalyst used in the process of the present invention. Carbon monoxide is an efficient hydrogen carrier (in accordance with the principle of oxosynthesis reactions), which makes it possible to avoid the use of molecular hydrogen under high pressure. For instance, if the catalyst comprises a metal carboxylate salt of which the metallic cation M is iron(II); and the carboxylate anion A is formic acid, the formation reaction is as follows:

(HCOO) Fe → Fe + CO + H₂O + CO₂

Without wanting to be bound by the theory, it is assumed that, at operating temperature, thermolysis of the catalyst with formation of metal, virtually of nano-particle size, and carbon monoxide, and thermolysis of hydrocarbon chains with formation of radical products occur first. The metal, which exhibits high activity, detaches atomic hydrogen from naphthenes and hydroaromatic components of the starting material and hydrogen donor, which is transferred by the metal, carbon monoxide and polycyclic arenes to radical products of thermolysis of the hydrocarbon starting material and hydrogen donor. This explains the high velocity of the catalytic cracking process, which is undoubtedly favorably influenced by the uniformity of distribution of the catalyst in the reaction mass, the low temperature and pressure values, the high degree of utilization of the hydrogen of the hydrogen-donor structures of the starting material and hydrogen donor, the low content of sulfur-, oxygen- and nitrogen-containing and unsaturated components, particularly α-olefins, the high yield of liquid products, and the increase in cracking process selectivity in relation to reactions of isomerization, cyclization, hydrogenation and dehydrogenation, hydrodealkylation, and hydrogenation with subsequent thermolysis of N-, S- and O-containing heterocycles.

As regards the catalyst, it is preferred that the carboxylate anion A of each metal carboxylate salt is independently of one another selected from the group consisting of anions of saturated C1-C10 carboxylic acids.

Furthermore, it is generally preferred that if the catalyst comprises more than one metal carboxylate salt (different from one another), each metal carboxylate salt preferably contains the same type of carboxylate anion A but a different metallic cation M, which are selected independently of one another from the groups as defined above.

It is also preferred that the metallic cation M of each metal carboxylate salt is independently of one another selected from the groups III, VIII and E.

It is further preferred that the catalyst comprises at least two different metal carboxylate salts, which contain the same type of carboxylate anion A and a respective metallic cation M1 or M2, whereby the metallic cations M1 and M2 differ from one another and are preferably selected from different groups.

In a further preferred embodiment, the catalyst comprises at least three different metal carboxylate salts, which contain the same type of carboxylate anion A and a respective metallic cation M1, M2 or M3, whereby the metallic cations M1, M2 and M3 differ from one another and are preferably selected from different groups. For instance, it is preferred that the catalyst comprises a first metal carboxylate salt [(M1ⁿ⁺) (A⁻)ₙ] of which the metallic cation M1 is selected from group III, a second metal carboxylate salt [(M2ⁿ⁺)(A⁻)ₙ] of which the metallic cation M2 is selected from group VIII and a third metal carboxylate salt [(M3ⁿ⁺)(A⁻)ₙ] of which the metallic cation M3 is selected from group E. In case that the catalyst comprises at least three different metal carboxylate salts as indicated above, it is further preferred that M1, M2 and M3 are used in a weight ratio from 1:1:1 to 1:2:3. Hereby, the weight ratio refers to the metal carboxylate salts, i.e. to [(M1ⁿ⁺)(A⁻)ₙ]:[(M2ⁿ⁺)(A⁻)ₙ]:[(M3ⁿ⁺)(A⁻)ₙ].

Overall, the catalyst is preferably used in an amount of 0.02-10.00 wt.%, preferably 0.02-2.0 wt.%, relative to the starting material.

The hydrogen donor, in particular a hydrogen donor solvent, is preferably enriched with cycloalkanes and hydroaromatic hydrocarbons, which are efficient hydrogen donors, and the dissociation energy of the C-H bond with formation of atomic hydrogen has a low value, which allows to reduce the initial reaction temperature, the pressure and also the cracking process time.

In a preferred embodiment, the hydrogen donor is derived from crude oil, and is in particular a 230-280 °C fraction of crude oil. Specifically preferred as a hydrogen donor is paraffinic-naphthenic oil, preferably a 230-380 °C fraction thereof, more preferably a 230-280 °C fraction thereof. When employing a hydrogen donor comprising or consisting of a 230-280 °C fraction of paraffinic-naphthenic oil, formation of carbon monoxide during thermolysis of the catalyst is particularly increased.

Since the process of the present invention allows for using an oil-derived hydrogen donor, it is particularly preferred that the cracking is performed in the absence of H₂ gas. In other words, the process of the present invention allows for avoiding the use of molecular hydrogen under pressure, which greatly reduces the fire- and explosion-hazard of the process.

If polycyclic arenes are present in the starting material, they can also serve as efficient carriers of hydrogen to the radical products of thermolysis of hydrocarbons. It is to be noted that the hydrogen donor, e.g. a 230-280 °C fraction of paraffinic-naphthenic oil, is preferably added solely in the beginning of the reaction process. In the later course of the reaction, the 230-280 °C fraction of the starting material formed during the reaction can function as the hydrogen donor.

It is further preferred that the hydrogen donor and the starting material are used in a weight ratio of 1:1 to 1:5.

In addition, the starting material, the hydrogen donor and the catalyst are preferably used in a weight ratio of about 1 : 3 : 0.05.

In regard to the petroleum products obtainable by employing the process of the present invention, it is particularly preferred that the average octane number is increased.

In addition, the process of the present invention preferably leads to a reduction of sulfur-, oxygen- and nitrogen-containing components and/or unsaturated components, particularly α-olefins.

The process of the present invention therefore allows for a production of petroleum products, which are not only lighter, i.e. reduction of average chains length of the products, but also of high quality.

For instance, the free metal particles remaining in the petroleum products can easily be removed by magnetic separation, while chemical compounds in the form of oxides and sulfides are washed out with water or hydrochloric acid solution.

The fraction of medium petroleum products with a boiling point in the range of 320-360 °C is preferably returned to the process, which allows the total yield of light petroleum products to be increased.

Gaseous light petroleum products, which are enriched in hydrogen, CH₄, C₂H₆, C₂H₂ and certain other hydrocarbons, can be cooled and subsequently passed through a saturator with alkali solution in order to trap SO₂, H₂S and CO₂. Thereafter, they can, for example, be used to operate a chamber furnace (heating the heat-transfer fluid circulating in the jacket of the reaction apparatus) or a steam generator (production of steam for the rectifying column).

Overall, the inventive process is characterized by a high ecological cleanness of the catalysis, rational utilization of the chemical and energy potential of the starting material, fire and explosion safety, and high economic parameters of the process.

### Materials and Methods

### Materials

Starting material: M-100 of heavy petroleum products (M-100 is a specific brand of mazut, i.e. heavy fuel oil, topped residuum, oil tar, oil sludges)

Hydrogen donor: crude oil or a 230-280 °C fraction thereof, enriched with cycloalkanes and hydroaromatic components as efficient hydrogen donors. The hydrogen donor may act as a solvent and a carrier of hydrogen to radical products of the thermolysis of heavy fuel oil hydrocarbons.

Catalyst: comprising one or more metal carboxylate salts, the carboxylate anion A of each metal carboxylate salt being independently of one another selected from the group consisting of anions of saturated C1-C20 carboxylic acid and the metallic cation M of each metal carboxylate salt being independently of one another selected from the groups III, IV, VI, VII, VIII and E.

Weight ratio of starting material:hydrogen donor:catalyst is 1 : 2-5 : 0.05-0.10.

### Preparation of the catalyst

A metal salt, preferably the chloride, is mixed with a saturated C1-C20 carboxylic acid, said mixture is heated until liberation of hydrogen chloride has completely ceased, and the resultant product is cooled, following which it is washed with hot water to remove chloride, dried to constant weight in a drying oven under nitrogen or argon, and ground to a 70-90 micron fraction in an agate mortar.

Example:

(R-COOH)₂ + FeCl₂ → (R-COO)₂Fe + 2HCl (R = H, C1-C19)

### Liquid-phase catalytic cracking process:

The starting material and optionally the hydrogen donor, in a weight ratio of 1:2-1:5, and the required amount of catalyst are charged into a rotary autoclave (2-liter).

The autoclave is pressurized, placed in a tube furnace, and connected to a reduction gear with an electric motor to rotate the autoclave at a speed of 20 rpm. A thermocouple is placed in a pocket situated in the center of the autoclave, after which the power is switched on. When the set temperature of 280-400 °C is reached, the autoclave is held at this for 30-120 min., after which rotation of the autoclave is stopped, the pressure value of 2-7 MPa is recorded and the autoclave is removed from the furnace and cooled to room temperature.

At operating temperature, thermolysis of the catalyst with formation of metal, virtually of nano-particle size, and carbon monoxide, and thermolysis of hydrocarbon chains with formation of radical products are observed first.

The volume of gas is measured (GKP-5) through a gas valve, then the autoclave is opened and the liquid products are discharged, filtered to remove mechanical contaminants, and weighed.

The liquid products which are formed in this process are characterized by a high content of low-molecular alkanes, iso- and cyclo-alkanes and hydroaromatic and aromatic hydrocarbons, high octane numbers and a low content of oxygen-, nitrogen- and sulfur-containing and unsaturated compounds. Said liquid products are subjected to atmospheric rectification to produce fractions with end points of up to 180 °C, 200-280 °C and above 280 °C (up to 360 °C).

The qualitative and quantitative composition of the individual fractions were characterized by gas-liquid chromatography (GLC) and chromatography/mass-spectrometry and the results thereof were used to calculate the structural-group composition of the liquid products as a whole and also of individual fractions, and to determine the octane number of the gasoline fraction.

### Examples

Specific examples of the process of the present invention are presented below. The amount and nature of the lighter petroleum products obtained for each Example are also shown in Table 1.

### Comparative Example No. 1

Starting material: West-Siberian crude oil, commercial sample, 1500 g

Reaction conditions:
Reaction temperature: 320 °C
Reaction pressure: 1.5 MPa
Reaction time: 60 min.

### Catalyst: -

Yield of liquid products (wt.%): 93.0
Yield of gaseous products (wt.%): 9.7

Yield (wt.%) of fractions of liquid products:
up to 180 °C - 10.8;
180-360 °C - 38.9;
above 360 °C - 50.3.

Structural-group composition of liquid products (wt.%): n-alkanes (C4-C37) - 18.2; iso-alkanes (C4-C30) - 23.2; Cyclopentanes - 2.3; cyclohexanes - 9.2; benzene (alkylbenzenes) - 11.6; naphthalene (methyl- and dimethyl-naphthalenes) - 3.0; anthracene, phenanthrene, fluorene, pyrene, chrysene - 0.1.

Structural-group composition of the up to 180 °C fraction (wt.%): n-alkanes (C4-C11) - 26.5; iso-alkanes (C4-C10) - 20.3; cyclopentanes - 3.3; cyclohexanes-6.7; benzene (methyl-, ethyl-, dimethyl, trimethyl-, n-and iso-propylbenzenes) - 8.4; cyclopentenes - 2.1; alkenes (α,β,γ) - 6.5; tetraline - 1.1; naphthalene (methyl- and dimethyl-naphthalenes) - 0.5.

Octane number: 60 ± 1.3
Sulfur content: 0.05 (wt.%)

### Comparative Example No. 2

Starting material: 230-280 °C fraction of crude oil, 2 L

Reaction conditions: 320 °C, 2.2 MPa, 60 min.

### Catalyst: -

Yield of liquid products (wt.%): 83.6
Yield of gaseous products (wt.%): 16.4

Yield (wt.%) of fractions of liquid products:
up to 180 °C - 15.5;
180-360 °C - 42.4;
above 360 °C - 42.1.

Structural-group composition of liquid products (wt.%): n-alkanes (C4-C37) - 14.2; iso-alkanes (C4-C30) - 16.5; cyclopentanes - 4.5; cyclohexanes - 11.8; benzene (alkylbenzenes) - 15.3; naphthalene (methyl- and dimethyl-naphthalenes) - 4.8; anthracene, phenanthrene, fluorene, pyrene, chrysene - 0.3.

Structural-group composition of up to 180 °C fraction (wt.%): n-alkanes (C4-C11) - 21.3; iso-alkanes (C4-C10) - 17.3; cyclopentanes - 4.8; cyclohexanes - 8.4; benzene (methyl-, ethyl-, dimethyl, trimethyl-, n- and iso-propylbenzenes) - 10.2; cyclopentenes - 3.1; alkenes (γ,β,α) - 7.2; cyclohexenes - 3.10; tetraline - 1.3; naphthalene (methyl- and dimethyl-naphthalenes) - 0.9.

Octane number: 66 ± 1.3
Sulfur content: 0.03 (wt.%)

### Comparative Example No. 3

Starting material: Heavy fuel oil, 500 g
Hydrogen donor: Crude oil, 1500 g
→ weight ratio of heavy fuel oil : crude oil = 1:3

Reaction conditions: 320 °C, 2.0 MPa, 60 min.

### Catalyst: -

Yield of liquid products (wt.%): 91.6
Yield of gaseous products (wt.%): 8.4

Yield (wt.%) of fractions of liquid products:
up to 180 °C - 13.8;
180-360 °C - 35.5;
above 360 °C - 50.7.

Structural-group composition of liquid products (wt.%): n-alkanes (C4-C37) - 26.8; iso-alkanes (C4-C30) - 21.2; Cyclopentanes - 3.0; cyclohexanes - 10.3; benzene (alkylbenzenes) - 15.8; naphthalene (methyl- and dimethyl-naphthalenes) - 3.5; anthracene, phenanthrene, fluorene, pyrene, chrysene - 0.5.

Structural-group composition of up to 180 °C fraction (wt.%): n-alkanes (C4-C11) - 28.4; iso-alkanes (C4-C10) - 22.1; cyclopentanes - 4.6; cyclohexanes - 7.4; benzene (methyl-, ethyl-, dimethyl, n- and iso-propylbenzenes) - 10.1; cyclopentenes - 2.4; alkenes (α,β,γ) - 7.0; cyclohexenes - 2.7; tetraline - 1.2; naphthalene (methyl- and dimethyl-naphthalenes) - 0.7.

Octane number: 65 ± 1.3
Sulfur content: 0.25 (wt.%)

### Comparative Example No. 4

Starting material: Heavy fuel oil, 500 g
Hydrogen donor: 230-280 °C fraction of crude oil, 1500 g
→ weight ratio of heavy fuel oil : crude oil = 1:3

Reaction conditions: 320 °C, 2.8 MPa, 60 min.

### Catalyst: -

Yield of liquid products (wt.%): 86.3
Yield of gaseous products (wt.%): 13.7

Yield (wt.%) of fractions of liquid products:
up to 180 °C - 17.8;
180-360 °C - 39.3;
above 360 °C - 42.9.

Structural-group composition of liquid products (wt.%): n-alkanes (C4-C37) - 16.9; iso-alkanes (C4-C30) - 18.8; Cyclopentanes - 4.0; cyclohexanes - 9.5; benzene (alkylbenzenes) - 13.2; naphthalene (methyl- and dimethyl-naphthalenes) - 4.0; anthracene, phenanthrene, fluorene, pyrene, chrysene - 0.4.

Structural-group composition of up to 180 °C fraction (wt.%): n-alkanes (C4-C11) - 23.5; iso-alkanes (C4-C10) - 21.8; cyclopentanes - 4.0; cyclohexanes - 7.2; benzene (methyl-, ethyl-, dimethyl, n- and iso-propylbenzenes) - 9.8; cyclopentenes - 2.3; alkenes (α,β,γ) - 6.6; cyclohexenes - 2.8; tetraline - 1.4; naphthalene (methyl- and dimethyl-naphthalenes) - 0.6.

Octane number: 68 ± 1.3

### Comparative Example No. 5

Starting material: Heavy fuel oil, 500 g
Hydrogen donor: 230-280 °C fraction of crude oil, 1500 g
→ weight ratio of heavy fuel oil : crude oil = 1:3

Reaction conditions: 360 °C, 3.1 MPa, 60 min.

### Catalyst: -

Yield of liquid products (wt.%): 77.5
Yield of gaseous products (wt.%): 22.5

Yield (wt.%) of fractions of liquid products:
up to 180 °C - 19.6;
180-360 °C - 46.5;
above 360 °C - 33.9.

Structural-group composition of liquid products (wt.%): n-alkanes (C4-C37) - 11.6; iso-alkanes (C4-C30) - 14.5; Cyclopentanes - 3.8; cyclohexanes - 9.8; benzene (alkylbenzenes) - 12.5; naphthalene (methyl- and dimethyl-naphthalenes) - 4.3; anthracene, phenanthrene, fluorene, pyrene, chrysene - 0.3.

Structural-group composition of up to 180 °C fraction (wt.%): n-alkanes (C4-C11) - 25.5; iso-alkanes (C4-C10) - 19.3; cyclopentanes - 5.5; cyclohexanes - 8.9; benzene (methyl-, ethyl-, dimethyl, n- and iso-propylbenzenes) - 12.2; cyclopentenes - 3.6; alkenes (α,β,γ) - 7.7; cyclohexenes - 3.5; tetraline - 1.6; naphthalene (methyl- and dimethyl-naphthalenes) - 0.1.

Octane number: 72 ± 1.3

### Comparative Example No. 6

Starting material: Heavy fuel oil, 500 g
Hydrogen donor: 230-280 °C fraction of crude oil, 1500 g
→ weight ratio of heavy fuel oil : crude oil = 1:3

Reaction conditions: 400 °C, 5.5 MPa, 60 min.

### Catalyst: -

Yield of liquid products (wt.%): 86.7
Yield of gaseous products (wt.%): 13.3

Yield (wt.%) of fractions of liquid products:
up to 180 °C - 13.5;
180-360 °C - 40.2;
above 360 °C - 46.3.

Structural-group composition of liquid products (wt.%): n-alkanes (C4-C37) - 21.6; iso-alkanes (C4-C30) - 26.2; Cyclopentanes - 2.8; cyclohexanes - 8.6; benzene (alkylbenzenes) - 13.5; naphthalene (methyl- and dimethyl-naphthalenes) - 4.0; anthracene, phenanthrene, fluorene, pyrene, chrysene - 0.6.

Structural-group composition of up to 180 °C fraction (wt.%): n-alkanes (C4-C11) - 28.3; iso-alkanes (C4-C10) - 22.2; cyclopentanes - 3.8; cyclohexanes - 7.2; benzene (methyl-, ethyl-, dimethyl, n- and iso-propylbenzenes) - 9.9; cyclopentenes - 2.5; alkenes (α,β,γ) - 7.4; cyclohexenes - 2.7; tetraline - 1.6; naphthalene (methyl- and dimethyl-naphthalenes) - 0.8.

Octane number: 74 ± 1.3

### Comparative Example No. 7

Starting material: Heavy fuel oil, 500 g
Hydrogen donor: 230-280 °C fraction of crude oil, 1500 g
→ weight ratio of heavy fuel oil : crude oil = 1:3

Reaction conditions: 320 °C, 4.6 MPa, 120 min.

### Catalyst: -

Yield of liquid products (wt.%): 87.2
Yield of gaseous products (wt.%): 12.8

Yield (wt.%) of fractions of liquid products:
up to 180 °C - 16.8;
180-360 °C - 43.6;
above 360 °C - 39.6.

Structural-group composition of liquid products (wt.%): n-alkanes (C4-C37) - 18.3; iso-alkanes (C4-C30) - 13.9; Cyclopentanes - 4.2; cyclohexanes - 13.1; benzene (alkylbenzenes) - 16.8; naphthalene (methyl- and dimethyl-naphthalenes) - 5.3; anthracene, phenanthrene, fluorene, pyrene, chrysene - 0.5.

Structural-group composition of up to 180 °C fraction (wt.%): n-alkanes (C4-C11) - 25.1; iso-alkanes (C4-C10) - 19.4; cyclopentanes - 5.2; cyclohexanes - 8.2; benzene (methyl-, ethyl-, dimethyl, n- and iso-propylbenzenes) - 11.0; cyclopentenes - 3.5; alkenes (α,β,γ) - 7.8; cyclohexenes - 2.7; tetraline - 1.5; naphthalene (methyl- and dimethyl-naphthalenes) - 1.3.

Octane number: 69 ± 1.3

### Example No. 8

Starting material: Heavy fuel oil, 500 g
Hydrogen donor: 230-280 °C fraction of crude oil, 1500 g
→ weight ratio of heavy fuel oil : crude oil = 1:3

Reaction conditions: 320 °C, 3.9 MPa, 60 min.

Catalyst: metal salt [(Mⁿ⁺)(A⁻)ₙ], 2.5 g (0.5 wt.% of heavy fuel oil)
- carboxylate anion A: one selected from the group of sat. C1-C20 carboxylic acids, e.g. C3 (propionic acid)
- metallic cation M: selected from group III, e.g. yttrium.

Yield of liquid products (wt.%): 81.3
Yield of gaseous products (wt.%): 18.7

Yield (wt.%) of fractions of liquid products:
up to 180 °C - 20.9;
180-360 °C - 45.1;
above 360 °C - 43.0.

Structural-group composition of liquid products (wt.%): n-alkanes (C4-C37) - 12.9; iso-alkanes (C4-C30) - 15.3; Cyclopentanes - 4.0; cyclohexanes - 12.3; benzene (alkylbenzenes) - 16.9; naphthalene (methyl- and dimethyl-naphthalenes) - 4.6; anthracene, phenanthrene, fluorene, pyrene, chrysene - 0.6.

Structural-group composition of up to 180 °C fraction (wt.%): n-alkanes (C4-C11) - 28.8; iso-alkanes (C4-C10) - 23.2; cyclopentanes - 5.3; cyclohexanes - 8.8; benzene (methyl-, ethyl-, dimethyl, n- and iso-propylbenzenes) - 12.5; cyclopentenes - 3.5; alkenes (α,β,γ) - 6.6; cyclohexenes - 2.8; tetraline - 1.6; naphthalene (methyl- and dimethyl-naphthalenes) - 1.2.

Octane number: 75 ± 1.3

### Example No. 9

Starting material: Heavy fuel oil, 500 g
Hydrogen donor: 230-280 °C fraction of crude oil, 1500 g
→ weight ratio of heavy fuel oil : crude oil = 1:3

Reaction conditions: 320 °C, 4.6 MPa, 60 min.

Catalyst: metal salt [(Mⁿ⁺)(A⁻)ₙ], 2.5 g (0.5 wt.% of heavy fuel oil)
- carboxylate anion A: one selected from the group of sat. C1-C20 carboxylic acids, e.g. C12 (lauric acid)
- metallic cation M: selected from group VIII, e.g. iron.

Yield of liquid products (wt.%): 73.5
Yield of gaseous products (wt.%): 26.5

Yield (wt.%) of fractions of liquid products:
up to 180 °C - 33.9;
180-360 °C - 46.2;
above 360 °C - 19.9.

Structural-group composition of liquid products (wt.%): n-alkanes (C4-C37) - 28.8; iso-alkanes (C4-C30) - 18.8; Cyclopentanes - 6.3; cyclohexanes - 10.5; benzene (alkylbenzenes) - 19.3; naphthalene (methyl- and dimethyl-naphthalenes) - 4.8; anthracene, phenanthrene, fluorene, pyrene, chrysene - 1.6.

Structural-group composition of up to 180 °C fraction (wt.%): n-alkanes (C4-C11) - 21.5; iso-alkanes (C4-C10) - 21.9; cyclopentanes - 8.6; cyclohexanes - 13.8; benzene (methyl-, ethyl-, dimethyl, n- and iso-propylbenzenes) - 13.3; cyclopentenes - 3.4; alkenes (α,β,γ) - 7.9; cyclohexenes - 1.5; tetraline - 1.8; naphthalene (methyl- and dimethyl-naphthalenes) - 0.8.

Octane number: 79 ± 1.3
Sulfur content: 0.10 (wt.%)

### Example No. 10

Starting material: Heavy fuel oil, 500 g
Hydrogen donor: 230-280 °C fraction of crude oil, 1500 g
→ weight ratio of heavy fuel oil : crude oil = 1:3

Reaction conditions: 320 °C, 5.6 MPa, 60 min.

Catalyst: metal salt [(Mⁿ⁺)(A⁻)ₙ], 2.5 g (0.5 wt.% of heavy fuel oil)
- A: one selected from the group of sat. C1-C20 carboxylic acids, e.g. C6 (caproic acid)
- M: selected from group E, e.g. cerium (Ce)

Yield of liquid products (wt.%): 83.4
Yield of gaseous products (wt.%): 16.6

Yield (wt.%) of fractions of liquid products:
up to 180 °C - 34.2;
180-360 °C - 50.1;
above 360 °C - 15.7.

Structural-group composition of liquid products (wt.%): n-alkanes (C4-C37) - 31.7; iso-alkanes (C4-C30) - 20.3; Cyclopentanes - 6.8; cyclohexanes - 12.3; benzene (alkylbenzenes) - 21.7; naphthalene (methyl- and dimethyl-naphthalenes) - 5.3; anthracene, phenanthrene, fluorene, pyrene, chrysene - 1.3.

Structural-group composition of up to 180 °C fraction (wt.%): n-alkanes (C4-C11) - 24.9; iso-alkanes (C4-C10) - 22.9; cyclopentanes - 10.2; cyclohexanes - 14.3; benzene (methyl-, ethyl-, dimethyl, n- and iso-propylbenzenes) - 14.8; cyclopentenes - 3.8; alkenes (α,β,γ) - 8.8; cyclohexenes - 1.8; tetraline - 2.3; naphthalene (methyl- and dimethyl-naphthalenes) - 1.3.

Octane number: 83 ± 1.3
Sulfur content: 0.015 (wt.%)

### Example No. 11

Starting material: Heavy fuel oil, 500 g
Hydrogen donor: 230-280 °C fraction of 1500 g crude oil
→ weight ratio of heavy fuel oil : crude oil = 1:3
→ weight ratio of heavy fuel oil : hydrogen donor = 1:5

Reaction conditions: 320 °C, 6.2 MPa, 60 min.

Catalyst: metal salt [(Mⁿ⁺) (A⁻)ₙ], 2.5 g (0.5 wt. % of heavy fuel oil)
- A: one selected from the group of sat. C1-C20 carboxylic acids, e.g. C16 (palmitic acid)
- M: selected from group E, e.g. cerium (Ce).

Yield of liquid products (wt.%): 87.4
Yield of gaseous products (wt.%): 12.6

Yield (wt.%) of fractions of liquid products:
up to 180 °C - 36.7;
180-360 °C - 51.2;
above 360 °C - 12.1.

Structural-group composition of liquid products (wt.%): n-alkanes (C4-C37) - 34.2; iso-alkanes (C4-C30) - 21.8; Cyclopentanes - 5.5; cyclohexanes - 8.3; benzene (alkylbenzenes) - 18.5; naphthalene (methyl- and dimethyl-naphthalenes) - 4.5; anthracene, phenanthrene, fluorene, pyrene, chrysene - 1.0.

Structural-group composition of up to 180 °C fraction (wt.%): n-alkanes (C4-C11) - 26.2; iso-alkanes (C4-C10) - 23.8; cyclopentanes - 10.8; cyclohexanes - 15.8; benzene (methyl-, ethyl-, dimethyl, n- and iso-propylbenzenes) - 16.1; cyclopentenes - 4.2; alkenes (α,β,γ) - 8.6; cyclohexenes - 1.5; tetraline - 2.0; naphthalene (methyl- and dimethyl-naphthalenes) - 1.0.

Octane number: 81 ± 1.3
Sulfur content: 0.018 (wt.%)

### Example No. 12

Starting material: Heavy fuel oil, 500 g
Hydrogen donor: 230-280 °C fraction of crude oil, 1500 g
→ weight ratio of heavy fuel oil : crude oil = 1:3

Reaction conditions: 400 °C, 6.7 MPa, 60 min.

Catalyst: metal salt [(Mⁿ⁺)(A⁻)ₙ], 2.5 g (0.5 wt.% of heavy fuel oil)
- A: one selected from the group of sat. C1-C20 carboxylic acids, e.g. C5 (valeric acid)
- M: selected from group E, e.g. lanthanum (La).

Yield of liquid products (wt.%): 78.5
Yield of gaseous products (wt.%): 21.5

Yield (wt.%) of fractions of liquid products:
up to 180 °C - 37.2;
180-360 °C - 52.3;
above 360 °C - 10.5.

Structural-group composition of liquid products (wt.%): n-alkanes (C4-C37) - 27.3; iso-alkanes (C4-C30) - 17.5; Cyclopentanes - 5.9; cyclohexanes - 10.3; benzene (alkylbenzenes) - 23.8; naphthalene (methyl- and dimethyl-naphthalenes) - 5.6; anthracene, phenanthrene, fluorene, pyrene, chrysene - 1.6.

Structural-group composition of up to 180 °C fraction (wt.%): n-alkanes (C4-C11) - 21.3; iso-alkanes (C4-C10) - 20.3; cyclopentanes - 8.8; cyclohexanes - 11.5; benzene (methyl-, ethyl-, dimethyl, n- and iso-propylbenzenes) - 17.8; cyclopentenes - 3.2; alkenes (α,β,γ) - 7.2; cyclohexenes - 1.3; tetraline - 1.6; naphthalene (methyl- and dimethyl-naphthalenes) - 1.5.

Octane number: 82 ± 1.3

### Example No. 13

Starting material: Heavy fuel oil, 500 g
Hydrogen donor: 230-280 °C fraction of crude oil, 1500 g
→ weight ratio of heavy fuel oil : crude oil = 1:3

Reaction conditions: 320 °C, 6.0 MPa, 60 min.

Catalyst: three different metal carboxylate salts, 2.5 g (total 0.5 wt.% of heavy fuel oil), wherein the three salts were used in a weight ratio of [(M1ⁿ⁺)(A⁻)ₙ:[(M2ⁿ⁺)(A⁻)ₙ]:[(M3ⁿ⁺)(A⁻)ₙ] = 1: 1: 1.
- A: one selected from the group of saturated C1-C20 carboxylic acids, e.g. C6 (caproic acid)
- M: M1 selected from the group III, e.g. aluminum;
   M2 selected from the group VIII, e.g. cobalt;
   M3 selected from the group E, e.g. cerium.

Yield of liquid products (wt.%): 76.2
Yield of gaseous products (wt.%): 23.8

Yield (wt.%) of fractions of liquid products:
up to 180 °C - 32.3;
180-360 °C - 50.7;
above 360 °C - 17.0.

Structural-group composition of liquid products (wt.%): n-alkanes (C4-C37) - 25.2; iso-alkanes (C4-C30) - 16.3; Cyclopentanes - 5.2; cyclohexanes - 9.6; benzene (alkylbenzenes) - 21.3; naphthalene (methyl- and dimethyl-naphthalenes) - 5.2; anthracene, phenanthrene, fluorene, pyrene, chrysene - 1.3.

Structural-group composition of up to 180 °C fraction (wt.%): n-alkanes (C4-C11) - 15.5; iso-alkanes (C4-C10) - 14.2; cyclopentanes - 8.3; cyclohexanes - 16.0; benzene (methyl-, ethyl-, dimethyl, n- and iso-propylbenzenes) - 18.8; cyclopentenes - 3.5; alkenes (α,β,γ) - 4.5; cyclohexenes - 1.5; tetraline - 1.8; naphthalene (methyl- and dimethyl-naphthalenes) - 1.4.

Octane number: 87 ± 1.3
Sulfur content: 0.01 (wt.%)

### Example No. 14

Starting material: Heavy fuel oil, 500 g
Hydrogen donor: 230-280 °C fraction of crude oil, 1500 g
→ weight ratio of heavy fuel oil : crude oil = 1:3

Reaction conditions: 320 °C, 6.3 MPa, 60 min.

Catalyst: as according to Example No. 13, 10 g (total 2.0 wt.% of heavy fuel oil)

Yield of liquid products (wt.%): 77.6
Yield of gaseous products (wt.%): 22.4

Yield (wt.%) of fractions of liquid products:
up to 180 °C - 34.7;
180-360 °C - 53.0;
above 360 °C - 12.4.

Structural-group composition of liquid products (wt.%): n-alkanes (C4-C37) - 28.2; iso-alkanes (C4-C30) - 18.3; Cyclopentanes - 4.3; cyclohexanes - 14.8; benzene (alkylbenzenes) - 20.0; naphthalene (methyl- and dimethyl-naphthalenes) - 6.2; anthracene, phenanthrene, fluorene, pyrene, chrysene - 1.0.

Structural-group composition of up to 180 °C fraction (wt.%): n-alkanes (C4-C11) - 16.3; iso-alkanes (C4-C10) - 14.8; cyclopentanes - 8.8; cyclohexanes - 16.3; benzene (methyl-, ethyl-, dimethyl, n- and iso-propylbenzenes) - 19.2; cyclopentenes - 3.7; alkenes (α,β,γ) - 4.8; cyclohexenes - 1.6; tetraline - 2.0; naphthalene (methyl- and dimethyl-naphthalenes) - 1.6.

Octane number: 86 ± 1.3
Sulfur content: 0.008 (wt.%)

### Example No. 15

Starting material: Heavy fuel oil, 500 g
Hydrogen donor: 230-280 °C fraction of crude oil, 1500 g
→ weight ratio ofheavy fuel oil : crude oil = 1:3

Reaction conditions: 320 °C, 6.6 MPa, 60 min.

Catalyst: three different metal carboxylate salts [(Mⁿ⁺)(A⁻)ₙ], 10 g (total 2.0 wt.% of heavy fuel oil)
- A and M: according to Example No. 13

Yield of liquid products (wt.%): 75.2
Yield of gaseous products (wt.%): 24.8

Yield (wt.%) of fractions of liquid products:
up to 180 °C - 35.2;
180-360 °C - 53.8;
above 360 °C - 8.0.

Structural-group composition of liquid products (wt.%): n-alkanes (C4-C37) - 29.2; iso-alkanes (C4-C30) - 19.6; Cyclopentanes - 4.5; cyclohexanes - 15.4; benzene (alkylbenzenes) - 20.2; naphthalene (methyl- and dimethyl-naphthalenes) - 6.8; anthracene, phenanthrene, fluorene, pyrene, chrysene - 1.2.

Structural-group composition of up to 180 °C fraction (wt.%): n-alkanes (C4-C11) - 17.4; iso-alkanes (C4-C10) - 15.4; cyclopentanes - 9.5; cyclohexanes - 17.2; benzene (methyl-, ethyl-, dimethyl, n- and iso-propylbenzenes) - 20.4; cyclopentenes - 4.2; alkenes (α,β,γ) - 5.4; cyclohexenes - 1.8; tetraline - 2.2; naphthalene (methyl- and dimethyl-naphthalenes) - 1.8.

Octane number: 89 ± 1.3

**Table 1**

| | **Reaction products** | **Example No.** | | | | | | | | | | | | | | |
|---|---|---|---|---|---|---|---|---|---|---|---|---|---|---|---|---|
| | | **1** | **2** | **3** | **4** | **5** | **6** | **7** | **8** | **9** | **10** | **11** | **12** | **13** | **14** | **15** |
| **1** | **Yield of liquid products (wt%)** | 90.3 | 83.6 | 91.6 | 86.3 | 77.5 | 86.7 | 87.2 | 81.3 | 73.5 | 83.4 | 87.4 | 78.5 | 76.2 | 77.6 | 75.2 |
| **2** | **Yield of gaseous products (wt.%)** | 9.7 | 16.4 | 8.4 | 13.7 | 22.5 | 13.3 | 12.8 | 18.7 | 26.5 | 16.6 | 12.6 | 21.5 | 23.8 | 22.4 | 24.8 |
| **3** | **Yield of fractions from liquid products (wt.%)** | | | | | | | | | | | | | | | |
| 3.1 | Up to 180 °C | 10.8 | 15.5 | 13.8 | 17.8 | 19.6 | 13.5 | 16.8 | 20.9 | 33.9 | 34.2 | 36.7 | 37.2 | 32.3 | 43.7 | 35.2 |
| 3.2 | 180-360 °C | 38.9 | 42.4 | 35.5 | 39.3 | 46.5 | 40.2 | 43.6 | 45.1 | 46.2 | 50.1 | 51.2 | 52.3 | 50.7 | 53.0 | 53.8 |
| 3.3 | Above 360 °C | 50.3 | 42.1 | 50.7 | 42.9 | 33.9 | 46.3 | 39.6 | 43.0 | 19.9 | 15.7 | 12.1 | 10.5 | 17.0 | 12.4 | 8.0 |
| **4** | **Structural-group composition (wt.%) of liquid products** | | | | | | | | | | | | | | | |
| 4.1 | n-Alkanes (C4-C37) | 18.2 | 14.2 | 26.8 | 16.9 | 11.6 | 21.6 | 18.3 | 12.9 | 28.8 | 31.7 | 34.2 | 27.3 | 25.2 | 28.2 | 29.2 |
| 4.2 | iso-Alkanes (C4-C30) | 23.2 | 16.5 | 21.2 | 18.8 | 14.5 | 26.2 | 13.9 | 15.3 | 18.8 | 20.3 | 21.8 | 17.5 | 16.3 | 18.3 | 19.6 |
| 4.3 | Cyclopentanes | 2.3 | 4.5 | 3.0 | 4.0 | 3.8 | 2.8 | 4.2 | 4.0 | 6.3 | 6.8 | 5.5 | 5.9 | 5.2 | 4.3 | 4.5 |
| 4.4 | Cyclohexanes | 9.2 | 11.8 | 10.3 | 9.5 | 9.8 | 8.6 | 13.1 | 12.3 | 10.5 | 12.3 | 8.3 | 10.3 | 9.6 | 14.8 | 15.4 |
| 4.5 | Benzene (alkylbenzenes) | 11.6 | 15.3 | 15.8 | 13.2 | 12.5 | 13.5 | 16.8 | 16.9 | 19.3 | 21.7 | 18.5 | 23.8 | 21.3 | 20.0 | 20.2 |
| 4.6 | Naphthalene (methyl- and dimethyl-naphthalenes) | 3.0 | 4.8 | 3.5 | 4.0 | 4.3 | 4.0 | 5.3 | 4.6 | 4.8 | 5.3 | 4.5 | 5.6 | 5.2 | 6.2 | 6.8 |
| 4.7 | Anthracene, phenanthrene, fluorene, pyrene, chrysene | 0.1 | 0.3 | 0.5 | 0.4 | 0.3 | 0.6 | 0.5 | 0.6 | 1.6 | 1.3 | 1.0 | 1.6 | 1.3 | 1.0 | 1.2 |
| **5** | **Structural-group composition of up to 180 °C fraction (wt.% of fraction)** | | | | | | | | | | | | | | | |
| 5.1 | n-Alkanes (C4-C37) | 26.5 | 21.3 | 28.4 | 23.5 | 25.5 | 28.3 | 25.1 | 28.8 | 21.5 | 24.9 | 26.2 | 21.3 | 15.8 | 16.3 | 17.4 |
| 5.2 | iso-Alkanes (C4-C30) | 20.3 | 17.3 | 22.1 | 21.8 | 19.3 | 22.2 | 19.4 | 23.2 | 21.9 | 22.9 | 23.8 | 20.3 | 14.2 | 14.8 | 15.4 |
| 5.3 | Cyclopentanes | 3.3 | 4.8 | 4.6 | 4.0 | 5.5 | 3.8 | 5.2 | 5.3 | 8.6 | 10.2 | 10.8 | 8.8 | 8.3 | 8.8 | 9.5 |
| 5.4 | Cyclohexanes | 6.7 | 8.4 | 7.4 | 7.2 | 8.9 | 7.2 | 8.2 | 8.8 | 13.8 | 14.3 | 15.8 | 11.5 | 16.0 | 16.3 | 17.2 |
| 5.5 | Benzene (methyl-, ethyl-, dimethyl, trimethyl-, n- and iso-propylbenzenes) | 8.4 | 10.2 | 10.1 | 9.8 | 12.2 | 9.9 | 11.0 | 12.5 | 13.3 | 14.8 | 16.1 | 17.8 | 18.8 | 19.2 | 20.4 |
| 5.6 | Cyclopentenes | 2.1 | 3.1 | 2.4 | 2.3 | 3.6 | 2.5 | 3.5 | 3.5 | 3.4 | 3.8 | 4.2 | 3.2 | 3.5 | 3.7 | 4.2 |
| 5.7 | Alkenes (α,β,γ) | 6.5 | 7.2 | 7.0 | 6.6 | 7.7 | 7.4 | 7.8 | 6.6 | 7.9 | 8.8 | 8.6 | 7.2 | 4.5 | 4.8 | 5.4 |
| 5.8 | Cyclohexenes | 2.4 | 3.1 | 2.7 | 2.8 | 3.5 | 2.7 | 2.7 | 2.8 | 1.5 | 1.8 | 1.5 | 1.3 | 1.5 | 1.6 | 1.8 |
| 5.9 | Tetraline | 1.1 | 1.3 | 1.2 | 1.4 | 1.6 | 1.6 | 1.5 | 1.6 | 1.8 | 2.3 | 2.0 | 1.6 | 1.8 | 2.0 | 2.2 |
| 5.10 | Naphthalene (methyl- and dimethyl-naphthalenes | 0.5 | 0.9 | 0.7 | 0.6 | 1.1 | 0.8 | 1.3 | 1.2 | 0.8 | 1.3 | 1.0 | 1.5 | 1.4 | 1.6 | 1.8 |
| **6** | **Octane number ± 1.3** | 60 | 66 | 65 | 68 | 72 | 74 | 69 | 75 | 79 | 83 | 81 | 82 | 87 | 86 | 89 |

## Claims

1. A process for catalytic cracking of a heavy petroleum starting material by treating the starting material with a catalyst and optionally a hydrogen donor at a temperature of 280-400 °C and a pressure of 2-7 MPa,
wherein the catalyst comprises one or more metal carboxylate salt(s),
the carboxylate anion A of each metal carboxylate salt being independently of one another selected from the group consisting of anions of saturated C₁-C₂₀ carboxylic acid,
and the metallic cation M of each metal carboxylate salt being independently of one another selected from the groups III, IV, VI, VII, VIII and E, wherein
- group III consists of scandium, yttrium, aluminum, gallium , indium and thallium;
- group IV consists of titanium, zirconium, hafnium, rutherfordium, tin and lead;
- group VI consists of chromium, molybdenum, tungsten, seaborgium and polonium;
- group VII consists of manganese, technetium, rhenium and bohrium;
- group VIII consists of iron, ruthenium, osmium, hassium, cobalt, rhodium, iridium, nickel, palladium and platinum, and
- group E consists of lanthanum, neodymium, dysprosium, cerium and samarium.

2. The process as claimed in claim 1, wherein it involves liquid-phase catalysis.

3. The process as claimed in claim 1 or 2, wherein the metallic cation M of each metal carboxylate salt is independently of one another selected from the groups III, VIII and E.

4. The process as claimed in one of the preceding claims, wherein the catalyst comprises at least two different metal carboxylate salts, the metallic cations M1 and M2 of the metal carboxylate salts being preferably selected from different groups.

5. The process as claimed in one of the preceding claims, wherein the catalyst comprises at least three different metal carboxylate salts, the metallic cations M1, M2 and M3 of the metal carboxylate salts being preferably selected from different groups.

6. The process as claimed in claim 5, wherein the catalyst comprises a first metal carboxylate salt of which the metallic cation M1 is selected from group III, a second metal carboxylate salt of which the metallic cation M2 is selected from group VIII and a third metal carboxylate salt of which the metallic cation M3 is selected from group E.

7. The process as claimed in claim 5 or 6, wherein the three different metal carboxylate salts are used in a weight ratio of 1:1:1 to 1:2:3.

8. The process as claimed in one of the preceding claims, wherein the catalyst is used in an amount of 0.02-10.00 wt.%, preferably 0.02-2.0 wt.%, relative to the starting material.

9. The process as claimed in one of the preceding claims, wherein the hydrogen donor is enriched with cycloalkanes and hydroaromatic hydrocarbons and the hydrogen donor and the starting material are preferably used in a weight ratio of 1:1 to 1:5.

10. The process as claimed in one of the preceding claims, wherein the hydrogen donor comprises paraffinic-naphthenic oil, preferably a 230-380 °C fraction, more preferably a 230-280 °C fraction of paraffinic-naphthenic oil.

11. The process as claimed in in one of the preceding claims, wherein the starting material, the hydrogen donor hydrogen and the catalyst are used in a weight ratio of about 1:3:0.05.

12. The process as claimed in one of the preceding claims, wherein the cracking is performed in the absence of H₂ gas.

13. The process as claimed in one of the preceding claims, wherein the average octane number is increased.

14. The process as claimed in one of the preceding claims, wherein the content of sulfur-, oxygen- and nitrogen-containing components and/or unsaturated components, particularly α-olefins, is reduced.

15. The process as claimed in in one of the preceding claims, wherein the fraction of petroleum products with a boiling point in the range of 320-360 °C is returned to the process.
